# EUROPEAN PATENT APPLICATION

(11) **EP 1 232 817 A2**
(43) Date of publication of application: **21.08.2002**
(21) Application number: 02003602.6
(22) Date of filing: 15.02.2002
(51) Int. Cl.: B23D 49/16, B23D 51/16

(54) **Reciprocating power tools**

(30) Priority: 16.02.2001 JP 2001040646
(71) Applicant: MAKITA CORPORATION, Anjo-shi, Aichi-ken (JP)
(72) Inventor: Sakaguchi, Takahiro, Anjo-shi, Aichi-ken (JP)
(74) Representative: Schmidtchen, Jürgen Christian

(57) **Abstract**

Reciprocating power tools may include a rotary member or crank disk (12) that is rotatably driven by a motor (M). The rotary member (12) may be operable to selectively rotate in a first direction or a second direction. A revolving member or connection (crank) pin (14) may be coupled to the rotary member (12) and have a longitudinal axis that is parallel to, but displaced from, the rotational axis of the rotary member. Preferably, the revolving member (14) revolves or orbits about the rotational axis of the rotary member when the rotary member (12) rotates. Further, the revolving member (14) is preferably movable relative to the rotary member (12) so as to change the distance between the revolving member (14) and the rotational axis of the rotary member (12). A motion conversion mechanism (13, 17) may convert the revolving movement of the revolving member (14) into linear reciprocating movement of a working tool (B). By changing the distance between the revolving member (14) and the rotational axis of the rotary member (12), the reciprocating stroke length of the working tool (B) may be changed.

## Description

This application claims priority to Japanese application serial number 2001-40646.

The present invention relates to reciprocating power tools, such as reciprocating saws and jigsaws. More specifically, the present invention relates to techniques for adjusting the stroke length of the reciprocating movement of a blade or saw that is driven by the reciprocating cutting tool.

Known electrically driven hammers include mechanisms for adjusting the reciprocating stroke length of the hammer. For example, motion conversion mechanisms have been utilized in order to convert the rotation of a motor into linear reciprocating movement of the hammer. The known motion conversion mechanism includes a slant plate that is mounted on an intermediate shaft via a sleeve. The motor rotatably drives the intermediate shaft, so that the slant plate swings in the axial direction, thereby causing reciprocating movement of a slider or a hammer that engages the slant plate. This type of hammer is known as a "slant-plate type hammer."

Generally speaking, such slant-plate type hammers include a slant shaft portion that is disposed substantially at the middle position in the axial direction of the intermediate shaft. The sleeve is fitted onto the slant shaft portion. Further, the axis of an inner peripheral surface of the sleeve is inclined relative to the axis of an outer peripheral surface of the sleeve. The sleeve can rotate relative to the slant shaft portion, so as to vary the inclination angle of the axis of the outer peripheral surface relative to the axis of the intermediate shaft. As a result, the tilt angle of the slant plate relative to the intermediate shaft may be changed in order to adjust the stroke length of the slider. Therefore, by changing the rotational direction of the motor, such stroke length adjustment can be made.

However, because such a motion conversion mechanism requires such a slant plate for converting the rotational movement of the motor into the linear reciprocating movement of the hammer, it is necessary to: (1) form the slant shaft portion on the intermediate shaft, (2) incline the axis of the inner peripheral surface relative to the axis of the outer peripheral surface, (3) form the inclined fitting portion on the sleeve for mounting the slant plate in an inclined position, and (4) incorporate means for adjusting the tilt angle of the slant plate by rotating the sleeve by a predetermined angle relative to the slant shaft portion. Therefore, the construction of the power hammer will be complex and precision machining techniques for manufacturing the parts of the power hammer are required. As a result, manufacturing costs for such hammers are relatively high.

It is, accordingly, one object of the present invention to teach improved reciprocating power tools. For example, in one aspect of the present teachings, reciprocating power tools may have a simple construction and can be manufactured at lower costs than known reciprocating power tools.

According to another aspect of the present teachings, reciprocating power tools are taught that include a crank mechanism that converts rotation of a rotary drive mechanism into linear reciprocating movement of a working tool (e.g., a blade or drill). Preferably, the crank mechanism may include a crank disk, which can rotate about a rotational axis, and a crank pin. A stroke adjusting mechanism may be utilized to change the distance between the crank pin and the rotational axis of the crank disk so as to vary the stroke length of the reciprocating movement of the working tool. Therefore, the stroke adjusting mechanism may have a simple construction and reciprocating power tools having such a stroke adjusting function may be manufactured at a relatively low cost.

In another aspect of the present teachings, the stroke adjusting mechanism may be operable to change the position of the crank pin relative to the crank disk.

In another aspect of the present teachings, the rotary drive mechanism may comprise a motor that can rotate in either a first direction or a second direction. The crank pin may be arranged and constructed to move relative to the crank disk between a first position and a second position in response to a change in the rotational direction of the motor. The first and second positions of the crank pin may respectively provide different stroke lengths for the operation of the working tool.

Additional objects, features and advantages of the present invention will be readily understood after reading the following detailed description together with the claims and the accompanying drawings, in which:

FIG. 1 is a partially broken-away side view of a representative reciprocating power saw;

FIG. 2 is an enlarged view of a portion of FIG. 1;

FIG. 3(A) is a view showing an operation of a representative stroke adjusting mechanism, in which the blade stroke length is set at a relatively small length (L); and

FIG. 3(B) is a view showing a further operation of the representative stroke adjusting mechanism, in which the blade stroke length is set at a relatively large length (L1).

In one embodiment of the present teachings, a reciprocating power tools may include a crank mechanism that is arranged and constructed to convert rotation of a rotary drive mechanism into linear reciprocating movement of a working tool (e.g., a blade or a drill). The crank mechanism may preferably include a crank disk that is arranged and constructed to pivot about a rotational axis and a crank pin extending or projecting from the crank disk. Preferably, the longitudinal axis of the crank pin is disposed in parallel with the rotational axis of the crank disk, but the longitudinal axis of the crank pin is not contiguous (i.e., non-overlapping) with the rotational axis of the crank disk. Further, a stroke adjusting mechanism may be arranged and constructed to change the distance between the crank pin and the rotational axis of the crank disk during operation so as to vary the reciprocating stroke length of the working tool. Optionally, the stroke adjusting mechanism may be arranged and constructed to change the position of the crank pin relative to the rotational axis of the crank disk.

In a further embodiment, the rotary drive mechanism may include a motor (e.g., a reversible motor) that can be driven in either a clockwise direction and a counter-clockwise direction. The crank pin may move relative to the rotational axis of the crank disk between a first position and a second position in response to a change in the rotational direction of the motor. Preferably, the first and second positions of the crank pin respectively provide or define different reciprocating stroke lengths of the working tool.

In another embodiment of the present teachings, reciprocating power tools may include a rotary member that is rotatably driven by a motor. The rotary member may be operable to selectively rotate in a first direction or a second direction. A revolving member may extend from the rotary member and may be displaced from the rotational axis of the rotary member. Thus, the revolving member preferably revolves about the rotational axis of the rotary member when the rotary member rotates. Moreover, the revolving member is preferably designed to move relative to the rotational axis of the rotary member so as to change the distance between the rotational axis of the rotary member and the revolving member. A motion conversion mechanism may be coupled to the revolving member and may convert the revolving movement of the revolving member into linear reciprocating movement of a working tool.

In a further embodiment, a switching lever may include a first end and a second end. The first end may be pivotally coupled to the rotary member. The revolving member may be coupled to the second end of the switching lever. Further, the distance between the rotational axis of the rotary member and the revolving member preferably changes when the switching lever pivots about the first end of the switching lever relative to the rotary member. Optionally, the distance between the rotational axis of the rotary member and the revolving member may be changed by changing the rotational direction of the rotary member. This change in rotational direction may be accomplished, e.g., by changing the rotational direction of the motor that drives the rotary member.

In a further embodiment, a stopper mechanism may define the pivotable range of the switching lever. For example, the switching lever may pivot between a first pivotal end and a second pivotal end that respectively define different reciprocating stroke lengths of the working tool. Optionally, a recess may be formed in the switching lever and a stopper pin may be coupled to the rotary member. The stopper pin may engage the recess between a first end and a second end of the recess, which ends limit the pivotal movement of the stopper pin. Thus, the first end and the second end may respectively define the first pivotal end and the second pivotal end.

The recess may optionally have an arc-shaped configuration and may be elongated along an arc about the pivotal axis of the switching lever. The switching lever may automatically pivot so as to bring (A) the first end of the recess into contact with the stopper pin when the rotary member rotates in the first direction and (B) the second end of the recess into contact with the stopper pin when the rotary member rotates in the second direction.

In a further embodiment, a slider may be coupled to and reciprocally move with respect to the motion conversion mechanism. The working tool may be coupled to the slider. A substantially linear recess may be defined within the slider and may extend substantially perpendicular to the moving direction (i.e., the linear reciprocating direction) of the slider. The revolving member may include a connection pin that engages the substantially linear recess.

In another embodiment, power tools may include a crank disk that is rotatably driven by a motor. The crank disk may selectively rotate in a first direction or a second direction. For example, the motor may be operable to rotate in either the first direction or the second direction, although the motor may be operable to rotate in only the first direction and other means, such as a transmission or other gear structure, may be provided to cause the crank disk to rotate in the second direction. A crank pin may extend from the crank disk and may be displaced from the rotational axis of the crank disk. Further, the longitudinal axis of the crank pin is preferably parallel, but not overlapping, with the rotational axis of the crank disk. Thus, the crank pin will revolve about the rotational axis of the crank disk when the crank disk rotates. The crank pin may be movable relative to the rotational axis of the crank disk so as to change the distance between the rotational axis of the crank disk and the crank pin. A guide roller may be coupled to the crank pin and a slider may be coupled to the guide roller. A bearing preferably supports linear reciprocating movement of the slider. A working tool, such as a blade or drill, is preferably coupled to the slider.

In another embodiment, a switching lever may have a first end and a second end. The first end of the switching lever may be pivotally coupled to the crank pin and the second end of the switching lever may be coupled to the crank disk. Preferably, the distance between the crank pin and the rotational axis of the crank disk changes when the switching lever pivots about the first end of the switching lever relative to the crank disk. This change may occur by changing the rotational direction of the crank disk.

In another embodiment, a stopper mechanism may define the pivotable range of the switching lever. For example, the switching lever may pivot between a first pivotal end and a second pivotal end of the stopper mechanism, which ends respectively define different reciprocating stroke lengths of the working tool. Optionally, a recess may be defined within the switching lever and a stopper pin may be coupled to the crank disk. For example, the stopper pin may extend along the rotational axis of the crank disk. Further, the stopper pin may engage the recess and may pivot between a first end and a second end of the recess, which ends limit the movement of the stopper pin. For example, the first end and the second end may respectively define the first pivotal end and the second pivotal end.

The recess may have an arc-shaped configuration that is elongated along an arc about the pivotal axis of the switching lever. In this case, the switching lever may automatically pivot so as to bring (A) the first end of the recess into contact with the stopper pin when the crank disk rotates in the first direction and (B) the second end of the recess into contact with the stopper pin when the crank disk rotates in the second direction.

Further, a substantially linear recess may be defined within the slider and extend substantially perpendicular to the moving direction of the slider. The crank pin may include a connection pin that engages the substantially linear recess.

Each of the additional features and teachings disclosed above and below may be utilized separately or in conjunction with other features and teachings to provide improved reciprocating power tools and methods for designing and using such reciprocating power tools. A representative example of the present invention, which example utilizes many of these additional features and teachings both separately and in conjunction, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detail description may not be necessary to practice the invention in the broadest sense, and are instead taught merely to particularly describe representative examples of the invention. Moreover, various features of the representative example and the dependent claims may be combined in ways that are not specifically enumerated in order to provide additional useful embodiments of the present teachings.

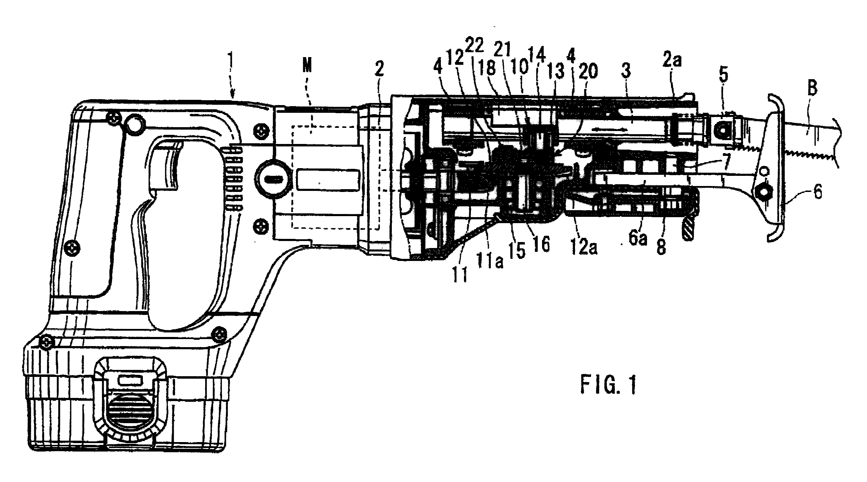

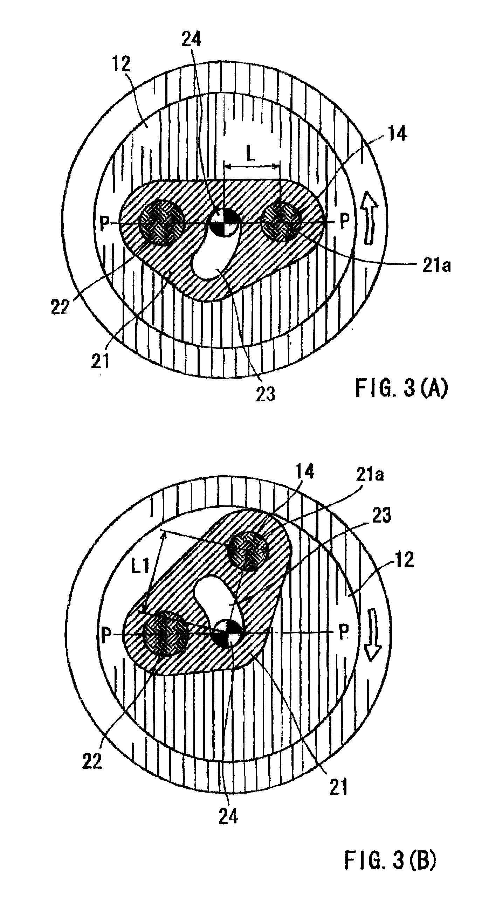

A representative embodiment of a reciprocating power saw according to the present teachings will now be described with reference to FIGS. 1 to 3(A) and 3(B). Referring first to FIG. 1, a representative reciprocating power saw 1 may include a housing 2 that extends in the forward and rearward directions (right and left directions as viewed in FIG. 1). A slider 3 may be slidably disposed within the front portion of the housing 2 and may serve as a linear reciprocating member, as will be further described below. Bearings 4 may be mounted within the housing 2 and may support the slider 3 at forward and reward positions, respectively, so that the slider 3 can move linearly (i.e., reciprocate) in the forward and rearward directions. The slider 3 may include a front portion that extends or projects outwardly beyond a nose 2a at the front end of the housing 2. Preferably, the nose 2a may have a substantially rectangular configuration in cross section. A working tool, such as saw blade B, may be attached to the front end of the slider 3 by means of a tool or blade holder 5. Various types of blade holders may be utilized with the present teachings and the design of the blade holder 5 is not particularly limited.

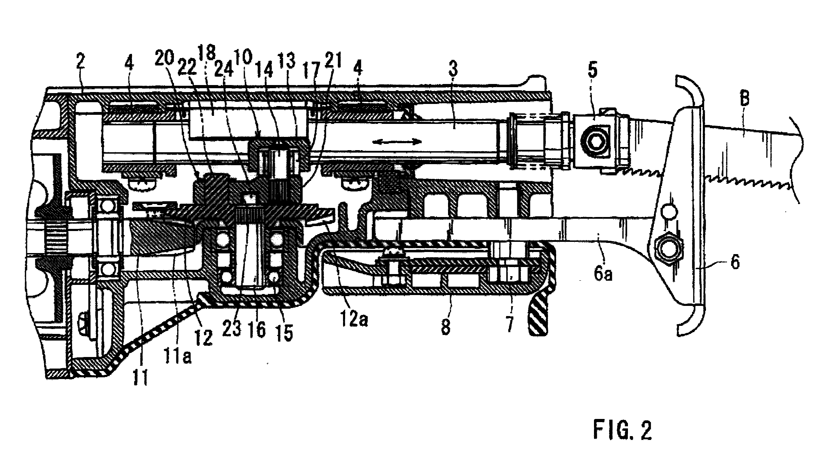

A shoe 6 may be adapted or designed to contact a workpiece during a cutting operation and may be coupled to a shaft 6a. The shaft 6a may be inserted into the nose 2a and preferably can slide in an axial direction (front and rearward directions) relative to the nose 2a. As shown in more detail in FIG. 2, the shaft 6a can be fixed in position by means of a screw 7 that can be tightened and loosened by means of a lever 8.

A crank mechanism 10 also may be disposed within the housing 2 and may serve to convert rotation of a motor M into a linear reciprocating movement of the slider 3. The crank mechanism 10 may include a rotary member (or crank disk) 12, a connection pin (or crank pin) 14 and an intermediate member 13. The connection pin 14 preferably extends or projects from the rotary member 12 and the longitudinal axis of the connection pin 14 preferably is parallel to, but non-overlapping with, the rotational axis of the rotary member 12. In other words, the connection pin 14 is preferably displaced from the rotational axis of the rotary member 12. The motor M preferably drives the rotary member 12. Optionally, the motor M may be a reversible motor that can be driven in either a first direction or a second direction (e.g., the motor can be driven in either a clockwise direction or a counterclockwise direction). The connection pin 14 may rotate with the rotary member 12. The intermediate member 13 may serve to convert the rotation of the connection pin 14 into linear reciprocating movement of the slider 3.

An upper end of a vertical support shaft 16 may be press-fitted into a centrally disposed hole within the rotary member 12. Therefore, the rotary member 12 can rotate with the support shaft 16. Bearing 15 rotatably supports the support shaft 16 with respect to the housing 2. Therefore, the rotary member 12 can rotate within a plane that is substantially horizontal when the housing 2 is held in a horizontal manner. In other words, the rotary member 12 is disposed to rotate within a plane that is parallel, or substantially parallel, with a plane in which the slider 3 reciprocates.

A bevel gear 12a may be formed integrally with the lower surface of the rotary member 12 and may engage a bevel gear 11a that is formed on a front end of a drive shaft 11 of the motor M. The intermediate member 13 may be secured to the slider 3 and may extend in a direction that is substantially perpendicular to the longitudinal axis or direction of the slider 3. Preferably, the intermediate member 13 may have a substantially inverted U-shaped cross section. Further, a roller bearing 17 may be mounted on the upper portion of the connection pin 14 and the roller bearing 17 and connection pin 14 may be disposed within a recess defined within the intermediate member 13 (e.g., the recess may be defined within the U-shaped cross-section). Thus, the intermediate member 13 and the roller bearing 17 may serve as a guide roller for the slider 3.

Therefore, when the motor M starts to rotate the drive shaft 11, the rotation of the drive shaft 11 is transmitted to the rotary member 12, so that the connection pin 14 revolves or orbits about an axis of the support shaft 16. Although the component of movement of the connection pin 14 in the longitudinal direction of the slider 3 is transmitted to the slider 3, the component in the direction perpendicular to the longitudinal direction of the slider 3 is not transmitted to the slider 3. Instead, the movement of the connection pin 14 within the recess of the intermediate member 13 absorbs the component of the movement in the direction perpendicular to the longitudinal direction of slider 3. Thus, rotational movement of the motor is effectively converted into linear reciprocating movement of the slider 3.

Optionally, a guide member 18 may be disposed adjacent to and above the intermediate member 13 and may serve to prevent the intermediate member 13 from moving upward, thereby preventing the slider 3 from rotating. Thus, the guide member 18 may serve as a bearing for supporting the linear reciprocating movement of the slider 3.

A stroke length adjusting mechanism 20 may serve to adjust the stroke length of the reciprocating movement of the slider 3 in response to the workpiece material that will be cut. For example, the stroke length adjusting mechanism 20 may serve to provide a relatively short stroke length when the workpiece is made of a relatively hard material and may serve to provide a relatively long stroke length when the workpiece is made of a relatively soft material. The stroke length adjusting mechanism 20 may include a switching lever 21 that is disposed on the upper surface of the rotary member 12. As shown in FIGS. 3(A) and (B), substantially circular slots 21a may be defined within the respective ends of the switching lever 21. A support pin 22 may be integrally formed with the upper surface of the rotary member 12 and may extend upwardly from the rotary member 12. The support pin 22 may be slidably inserted into one of the circular slots 21a, so that the switching lever 21 can rotate relative to the rotary member 12. The upper end of the connection pin 14 may be press-fitted into the other circular slot 21a.

The support pin 22 may serve as a pivotal fulcrum of the switching lever 21 and may be positioned so as to be displaced from the axis of the support shaft 16, which axis may serve as a rotational axis of the rotary member 12. An arc-shaped slot 23 may be formed in substantially the central portion of the switching lever 21 and may be elongated along an arc about the support pin 22 or the pivotal fulcrum. A stopper pin 24 may be integrally formed with the upper end of the support shaft 16 and may engage the arc-shaped slot 23.

Therefore, the switching lever 21 can pivot about the support pin 22 within a movable range of the stopper pin 24 relative to the arc-shaped slot 23. As the switching lever 21 pivots, the position of the connection pin 14 changes relative to the arc-shaped slot 23. Thus, the distance or length L (see FIG. 3(A)) between the axis of the support shaft 16 (the rotational axis of the rotary member 12) or the stopper pin 24 and the axis of the connection pin 14 may be changed.

Therefore, as the rotary member 12 rotates in the counterclockwise direction as viewed in FIG. 3(A), the switching lever 21 pivots relative to the rotary member 12 in the clockwise direction until the stopper pin 24 abuts the upper end of the slot 23. In that case, the connection pin 14 will be spaced from the stopper pin 24 by the distance L along the line P-P that extends through the axis of the support shaft 16 and the axis of the support pin 22. Then, the switch lever 21 will rotate with the rotary member 12. As a result, the connection pin 14 will rotate along a circle of radius L about the stopper pin 24 of the drive shaft 16, which is the rotational axis of the rotary member 12.

On the other hand, when the rotary member 12 rotates in the clockwise direction as viewed in FIG. 3(B), the switching lever 21 pivots relative to the rotary member 12 in the counterclockwise direction until the stopper pin 24 abuts the lower end of the slot 23. In that case, the connection pin 14 will be spaced from the line P-P by the distance L1, which is greater than the distance L. Then, the switch lever 21 will rotate with the rotary member 12. As a result, the connection pin 14 will rotate along a circle of radius L1 about the rotational axis of the rotary member 12.

Thus, according to this representative embodiment, the radius of rotation of connection pin 14 may be changed in response to the direction of rotation of the rotary member 12. When the radius of rotation of the connection pin 24 changes, the stroke length of the reciprocating movement of the slider 3 may be changed. More specifically, in this representative embodiment, the slider 3 will reciprocate by a stroke length 2L when the rotary member 12 rotates in the counterclockwise direction. On the other hand, the slider 3 will reciprocate by a stroke length 2L1, which is greater than 2L, when the rotary member rotates in the clockwise direction. For example, by reversing or changing the rotational direction of the motor M, the change of the rotational direction of the rotary member 12 may be attained. However, a transmission or other means for changing the rotational direction of the rotary member 12 may be utilized if the motor M only rotates in a single direction.

The stroke length of the reciprocating movement of the slider 3 may be selectively changed in response to the workpiece material that will be cut. As noted above, if the workpiece is made of a relatively soft material, such as a wood plate, the stroke length may be chosen to be a relatively large distance (e.g., 2L1). However, if the workpiece is made of a relatively hard material, such as a steel plate, the stroke length may be chosen to be a relatively small distance (e.g., 2L). A switch (not shown) may be disposed on the housing 2 and coupled to the motor M. Thus, the operator may actuate the switch in order to determine the rotational direction of the motor M, and thus to determine the stroke length of the blade B.

According to the above-described representative embodiment, the crank mechanism 10 may be utilized to convert rotational movement of the motor M into linear reciprocating movement of the slider 3. Further, the crank mechanism 10 may have a relatively simple construction in comparison with known motion conversion mechanisms that incorporate a slant plate. Therefore, the motion conversion mechanism of this representative embodiment can be easily manufactured and the sizes of the individual parts may be easily controlled. As a result, manufacturing costs may be reduced.

In addition, in order to change the reciprocating stroke length of the slider 3 or the reciprocating stroke length of the blade B, the stroke length adjustment mechanism 20 may utilize the switching lever 14, which may be assembled into the crank mechanism 10 and may serve to change the distance between the longitudinal axis of the connection pin 14 and the rotational axis of the rotary member 12. Therefore, the stroke length adjustment mechanism 20 may have a simple construction and may be manufactured at a relatively low cost.

As noted above, the present teachings are not limited to the representative embodiment described above and may be modified in various ways. For example, although the change in stroke length of the slider 3 may be realized by changing the rotational direction of the motor M in the above representative embodiment, an intermediate gear may be provided in a transmission path between the motor M and the rotary member 12. In addition, an operation mechanism may be provided and may serve to operate the intermediate gear from the outside so as to change the engaging condition of the transmission path and to consequently change the rotational direction of the rotary member 12.

In addition, although the switch lever 21 is automatically shifted to change the stroke length of the slider 3 is response to a change in the rotational direction of the motor M, the switch lever 21 may be manually shifted for a particular design of the switch lever 21 and the arc-shaped recess 23. In this connection, a lock mechanism may be provided and may serve to lock the switch lever 21 in the shifted position.

Further, although the switch lever 21 rotates relative to the rotary member 12 in order to change the distance (i.e., L or L1) between the rotational axis of the rotary member 12 and the longitudinal axis of the connection pin 14, the switch lever 21 may be shifted in the radial direction of the rotary member 12 so as to change the position of the connection pin 14. The position of the connection pin 14 may be manually fixed.

Furthermore, the switching lever 12 may be replaced with an arc-shaped recess formed in the rotary member 12 about the support pin 22. In this case, the connection pin 14 may slidably engage the arc-shaped recess. In addition, the connection pin 14 may slide along the arc-shaped recess so as to change the distance between the longitudinal axis of the connection pin 14 and the rotational axis of the rotary member 12.

According to a further modification, although both ends of the recess 23 serve as stoppers for determining the reciprocating stroke length in the above representative embodiment, the ends of the recess 23 may be replaced with projections formed on the rotary member 12. The projections may be spaced from each other and may be adapted to contact or abut the side surfaces of the switching lever so as to limit the pivotal range of the switching lever.

Moreover, although the rotary member 12 serves as a crank disk and has a circular configuration in the above representative embodiment, it may have different configurations. For example, the rotary member 12 may have a bar-shaped configuration and may be constructed such that the length of the rotary member 12 may be varied to change the position of the connection pin 14.

Although the above representative embodiment has been described in connection with a reciprocating saw, the present teaching are naturally applicable to other reciprocating power tools, such as jigsaws and hammers. In addition, the present invention also may be applied to hammer drills in which a drill bit can reciprocate vertically while rotating, if the switching of the stroke length by reversing the rotational direction of the motor M is not incorporated.

## Claims

1. A reciprocating power tool (1) comprising:
a crank mechanism (10) for converting rotation of a rotary drive mechanism (M) into linear reciprocating movement of a working tool (B), the crank mechanism including a crank disk (12) that rotates about a rotational axis and a crank pin (14) extending from the crank disk, the crank pin being displaced from the rotational axis of the crank disk and
a stroke length adjusting mechanism (20) for changing the distance between the crank pin and the rotational axis of the crank disk in order to vary the reciprocating stroke length of the working tool.

2. A reciprocating power tool as in claim 1, wherein the stroke length adjusting mechanism comprises a switching lever (21) that engages the crank pin and a stopper pin (24), the stopper pin extending from the crank disk along the rotational axis of the crank disk, the switching lever causing the distance between the crank pin and the stopper pin to be (A) a first distance (L) when the crank disk rotates in a first direction and (B) a second distance (L1) when the crank disk rotates in a second direction.

3. A reciprocating power tool as in claim 1 or 2, wherein the rotary drive mechanism comprises a motor (M) that can be driven in a clockwise direction or a counter-clockwise direction, and the crank pin is arranged and constructed to move relative to the crank disk between a first position and a second position in response to a change in the rotational direction of the motor, wherein the first and second positions of the crank pin respectively impart different reciprocating stroke lengths to the working tool.

4. A reciprocating power tool (1) comprising:
a motor (M),
a rotary member (12) rotatably driven by the motor, wherein the rotary member has a rotational axis and is operable to selectively rotate in a first direction or a second direction,
a revolving member (14) extending from the rotary member and displaced from the rotational axis of the rotary member, wherein the revolving member revolves about the rotational axis of the rotary member when the rotary member rotates, the revolving member being arranged and constructed to move relative to the rotational axis of the rotary member so as to change the distance between the rotational axis of the rotary member and the revolving member, and
a motion conversion mechanism (13, 17) coupled to the revolving member and converting the revolving movement of the revolving member into linear reciprocating movement of a working tool (B).

5. A reciprocating power tool as in claim 4, further including a switching lever (21) that has a first end and a second end, the first end pivotally coupled to the rotary member and the revolving member coupled to the second end of the switching lever, wherein the distance between the rotational axis of the rotary member and the revolving member changes when the switching lever pivots about the first end of the switching lever relative to the rotary member.

6. A reciprocating power tool as in claim 5, further including a stopper mechanism (23, 24) that defines a pivotable range of the switching lever, wherein the switching lever is arranged and constructed to pivot between a first pivotal end and a second pivotal end that respectively define different reciprocating stroke lengths of the working tool.

7. A reciprocating power tool as in claim 5 or 6, wherein a recess (23) is formed in the switching lever and a stopper pin (24) is coupled to the rotary member, the stopper pin engaging the recess and the recess having a first end and a second end, which ends limit pivotal movement of the stopper pin, wherein the first end and the second end respectively define the first pivotal end and the second pivotal end.

8. A reciprocating power tool as in claim 7, wherein the recess has an arc-shaped configuration and is elongated along an arc about the pivotal axis of the switching lever, and wherein the switching lever is arranged and constructed to automatically pivot so as to bring (A) the first end of the recess into contact with the stopper pin when the rotary member rotates in the first direction and (B) the second end of the recess into contact with the stopper pin when the rotary member rotates in the second direction.

9. A reciprocating power tool as in any of claims 4-8, further including a slider (3) coupled to and reciprocally moving with respect to the motion conversion mechanism, the working tool being coupled to the slider, wherein a substantially linear recess is defined within the slider and extends substantially perpendicular to the moving direction of the slider, the revolving member including a crank pin (14) that engages the substantially linear recess.

10. A power tool (1) comprising:
a motor (M),
an crank disk (12) rotatably driven by the motor, wherein the crank disk can selectively rotate in a first direction or a second direction,
a crank pin (14) extending from the crank disk and displaced from the rotational axis of the crank disk, whereby the crank pin revolves about the rotational axis of the crank disk as the crank disk rotates, wherein the crank pin can move relative to the crank disk so as to change the distance (L, L1) between the crank pin and the rotational axis of the crank disk,
a guide roller (13, 17) coupled to the crank pin,
a slider (3) coupled to the guide roller,
a bearing (18) supporting linear reciprocating movement of the slider, and
a working tool (B) coupled to the slider.

11. A power tool as in claim 10, wherein the working tool is selected from the group consisting of a blade and a drill.

12. A power tool as in claim 10 or 11, further comprising a switching lever (21) that has a first end and a second end, the first end of the switching lever pivotally coupled to the crank disk and the second end of the switching lever coupled to the crank pin, wherein the distance (L, L1) between the crank pin and the rotational axis of the crank disk changes when the switching lever pivots about the first end of the switching lever relative to the crank disk.

13. A power tool as in claim 12, further comprising an aperture (23) that defines a pivotable range of the switching lever, wherein the switching lever is arranged and constructed to pivot between a first pivotal end and a second pivotal end that respectively define different reciprocating stroke lengths of the working tool.

14. A power tool as in claim 13, wherein the aperture is defined within the switching lever and a stopper pin (24) is coupled to the crank disk, the stopper pin engaging the aperture and the aperture having a first end and a second end, which ends limit pivotal movement of the stopper pin, wherein the first end and the second end respectively define the first pivotal end and the second pivotal end.

15. A power tool as in claim 13 or 14, wherein the aperture has an arc-shaped configuration and is elongated along an arc about the pivotal axis of the switching lever, and wherein the switching lever is arranged and constructed to automatically pivot so as to bring
(A) the first end of the aperture into contact with the stopper pin when the crank disk rotates in the first direction and (B) the second end of the aperture into contact with the stopper pin when the crank disk rotates in the second direction.

16. A power tool as in any of claims 11-15, wherein a substantially linear recess is defined within the slider and extends substantially perpendicular to the moving direction of the slider, the crank pin engaging the substantially linear recess.

17. A power tool as in any of claims 11-16, wherein the motor is arranged and constructed to selectively rotate in a first direction or a second direction.

18. A power tool (1) comprising:
a motor (M),
a crank disk (12) driven by the motor, the crank disk being rotatable in a first direction or a second direction about a rotational axis,
a crank pin (14) extending from the crank disk, the crank pin being displaced from and movable with respect to the rotational axis of the crank disk,
means (20) for changing the displacement of the crank pin with respect to the rotational axis of the crank disk from (A) a first distance when the crank disk is rotating in the first direction to (B) a second distance when the crank disk is rotating in the second direction and
means (3) for setting a first reciprocating stroke length of a working tool based upon the first distance and setting a second reciprocating stroke length of the working tool based upon the second distance, wherein the first reciprocating stroke length is different from the second reciprocating stroke length.

19. A power tool as in claim 18, further comprising the working tool (B) selected from the group consisting of a blade and a drill.

20. A method for changing a reciprocating stroke length of a working tool (B) driven by a power tool (1) comprising a crank disk (12) driven by a motor (M), the crank disk being rotatable around a rotational axis in a first direction or a second direction, and a crank pin (14) extending from the crank disk, the crank pin being displaced from and movable with respect to the rotational axis of the crank disk, the method comprising:
changing the displacement of the crank pin with respect to the rotational axis of the crank disk from (A) a first distance (L) when the crank disk is rotating in the first direction to (B) a second distance (L1) when the crank disk is rotating in the second direction,
setting a first reciprocating stroke length of a working tool based upon the first distance and
setting a second reciprocating stroke length of the working tool based upon the second distance, the first reciprocating stroke length being different from the second reciprocating stroke length.
